# EUROPEAN PATENT SPECIFICATION

(11) **EP 1 459 579 B1**
(45) Date of publication and mention of the grant of the patent: **15.06.2011**
(21) Application number: 01274990.9
(22) Date of filing: 19.12.2001
(51) Int. Cl.: H04W 48/18, H04W 88/06

(54) **METHOD FOR CONTROLLING A WIRELESS MULTI-BAND AND/OR MULTI-WAVE WIRELESS TELECOMMUNICATIONS DEVICE**
VERFAHREN ZUM STEUERN VON EINEM DRAHTLOSEN MULTIBAND UND/ODER MULTIMODE TELEKOMMUNIKATIONSGERÄT
PROCEDE DE COMMANDE D'UN DISPOSITIF DE TELECOMMUNICATION SANS FIL MULTI-BANDE ET/OU MULTI-MODE

(43) Date of publication of application: 22.09.2004
(73) Proprietor: Nokia Corporation, 02150 Espoo (FI)
(72) Inventor: ANSORGE, Christian, 89075 Ulm (DE)
(74) Representative: Nordic Patent Service A/S
(86) International application number: PCT/EP2001/015030
(87) International publication number: WO 2003/053086

(56) References cited:
- US-A- 5 504 803
- US-B1- 6 223 037
- US-B1- 6 229 996

## Description

The present invention relates to a method for controlling a multi-band and/or multi-mode telecommunications device, in particular to a method for controlling such device that is provided with an automatic operating mode selection mechanism.

### Background of the invention

A conventional triple band mobile telephone (Timeport P7389, Motorola), is provided with a manual selection mechanism for selecting a first or a second set of frequency bands of the GSM (global system for mobile communications) standard. In particular, the frequency bands according to GSM 900 and GSM 1800 or the frequency band according to GSM 1900 can be selected by the manual selection mechanism for operating this conventional mobile phone either in a dual band or a single band operating mode.

However, for selecting between operating modes that can be performed by this conventional mobile telephone, the user has to know which kind of networks he can expect in a certain geographic area or the user needs to try all possible operational modes until he finds a successful network connection. This is inconvenient, consumes time and power so that the autonomy of such a mobile telephone is reduced when it is powered by a battery.

Another multi-band/multi-mode terminal is described in US 5,999,811. In this terminal the allowed or preferred band information, i.e. information about the network that has to be primarily used is stored somewhere in the terminal, e.g. in memory portion provided on a subscriber identification module-(SIM)-card. This individual configuration is made according to the needs of the network operator to make sure that his revenue stays as wanted.

WO 95/01 070 discloses a multi network communication method for telecommunication in an environment which includes a number of different telecommunications networks, using a multi network terminal. This multi network terminal itself detects those telecommunications networks to which it has access. After detecting available communications networks the multi network terminal itself decides in which of the accessible telecommunications networks communication shall take place on the basis of predetermined decision criteria.

However, searching all accessible telecommunications networks prior to selecting one of them needs a rather long time and reduces the stand by time of this terminal if it is powered by a battery.

US 5,504,803 is concerned with a method for automatic mode selection for a dual mode telephone handset for use in a cellular mobile telephone system and in a wireless telephone system. The dual mode telephone handset of this system always tries to find the private wireless telephone system first. Only when know private wireless telephone system is found the handset starts to scan the frequency band or bands of the cellular system for an accessible network.

### Summary of the invention

Accordingly, it is an object of the present invention to provide a method for controlling a wireless multi-band and/or multi-mode communications device that uses an automatic operating mode selection mechanism, that speed up the search for an accessible communications network and simultaneously reduces power consumption.

This object is achieved by a controlling method comprising the steps of searching for a communications network by scanning that frequency band or operation mode first that was used during the last successful operation, and continuing the search through all possible frequency bands or modes only in case that no accessible network was found in the group of frequency bands searched first.

According to the present invention information about that network or service is stored that was successfully contacted immediately before the last interruption of the connection either due to a loss of coverage or switching off the communications device. In the first case the communications device is controlled for searching another accessible network first in the same frequency band or operation modes and, if no such network will be found, the search is continued through other possible frequency bands or modes. Similarly, in the latter case after switching on the communications device the search for an accessible network is started in the frequency band or mode of the last successful connection to a network. This results in a reduction of time for detecting an available network and therefore in a reduction of power consumption since it is more probably that the user of the communications device has made no major geographical movements since the last operation. For example, if user do not leave Europe both the GSM 900 and the GSM 1800 are available so that even if the coverage of one network was lost he/she will be most probably in the coverage area of another network operating in accordance with the same standard.

To improve the operation of a multi-band and/or multi-mode communications device it is preferred that frequency bands and/or operating modes are grouped so that each group contains those of the frequency bands and/or operating modes only, that can exist in a single geographic area, wherein after detecting an accessible network further operation is restricted to those frequency bands and/or operating modes that belong to the same group as the frequency band and operating mode used by the accessible network, as long as a network is available in spite of this restriction.

This ensures that searching for a communications network will be conducted through those frequency bands and/or operating modes that will be most probably available. Only in case that no accessible network can be found the search will be conducted through the other frequency bands and operating modes that can be use with the communications device in question. E.g. if the communications device was operated together with a network operating in accordance with the GSM 1800 standard and no other network could be found in the respective frequency band, the search will switch over to the frequency band of the GSM 900 standard that co-exists in Europe together with the GSM 1800 standard.

By grouping only those frequency bands and operating modes together that can exist in a single geographic area it is possible to avoid checking all interesting frequency bands and/or wireless standards in case that the link to the actual network gets lost. Therefore, a power consumption and needed time can be reduced or at least limited to a reasonable amount.

In addition, after the communications device is switched on it scans for possible networks to be connected to in that frequency band first that was successfully used during the last operation period. When an accessible network with successful service was found the device continues with only enabling those operating modes which were predefined to exist together with this first network. Other operating modes are barred as long as a service or network out of the first group exist.

According to a refinement of the present invention it is preferred that after abolishing the restriction of operation in case that no accessible network can be found in the selected group, the search for an accessible communications network is continued for all possible frequency bands and/or operating modes starting with a frequency band and/or operating modes that does not belong to the group of frequency bands and/or operating modes that has been selected by the restriction.

Accordingly, whenever the communications device loses the connection to a network completely the scanning process for searching an accessible network continues with searching networks in all possible frequency bands and/or operating modes, wherein those frequency bands and/or operating modes are searched first that were excluded by the restriction.

### Brief description of the drawings

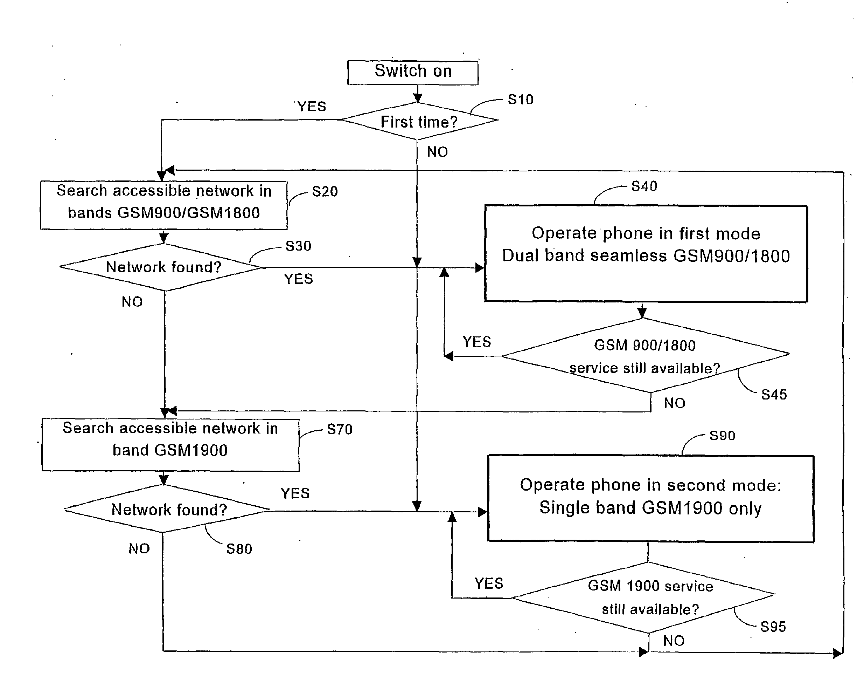

The invention will be explained in more detail hereinafter with reference to the accompanying drawing the only figure of which shows a simplified schematic flow chart of the inventive method.

### Detailed description of the preferred embodiments

As shown in the figure a method for controlling a wireless multi-band, multi-mode communications device, in particular a triple band, double mode mobile telephone comprises the first step S10 of deciding whether or not the mobile telephone was switched on the very first time. If so in step S20 the search for a network in the frequency band of the GSM 900 and GSM 1800 standards is conducted. There after, it is decided in step S30 whether or not an accessible network was found. In case that the search of step S20 was successful the mobile phone will be operated in step S40 in a first mode; i.e. in a dual band mode using the frequency bands of GSM 900 and GSM 1800. In this first mode roaming and handover is performed in a way well known for dual band mobile telephones.

In particular, during the operation of the mobile telephone in step S40 in the first mode in case that the link to the actual network gets lost due to losing coverage, i.e. when the user is leaving the coverage area of the accessed network, a new network is searched first in the used frequency band an then in the other of the group of two co-existing frequency bands according to GSM 900 and GSM 1800.

If the search of step S20 was not successful, the search for an accessible network is continued in the next possible frequency band, i.e. in the frequency band of GSM 1900 in step S70 thereafter it is decided in step S80 whether an accessible network was found in step S70. If no accessible network was found in step S70 the search is continued in step S20. However, if an accessible network was found in step S70 the operation of the mobile phone is continued in step S90 using a second mode, e.g. a single band mode using only the frequency band of GSM 1900. I.e. in case that the access to actual network got lost, searching for another accessible network will be performed only in the frequency band of GSM 1900.

Thus, in both operating modes a search through frequency bands that will be most probably not successful is prevented by restricting the search to those frequency bands that exists together with the frequency band of the actual network. However, after conducting a search through the allowed frequency bands it is checked in step S45 or S95 whether or not the search was successful, if so the operating mode of the mobile phone will not be changed.

Otherwise, the restriction of the search area, i.e. the restriction to one of a group of frequency bands is abolished and the search is continued through all possible frequency bands. In a most simple case the search for a new accessible network will be simply continued with the first searching step, i.e. with step S20.

However, since it was decided in step S45 that the frequency bands according to GSM 900 and GSM 1800 are not available it is more likely that an accessible network will be found in the frequency band of GSM 1900. Thus, the operating of the mobile phone is continued with searching an accessible network in the frequency band 1900.

In a similar way, when a GSM 1900 network is no longer available the search for an accessible network will be continued in the GSM 900 frequency band in step S20.

Further, in case that a mobile telephone controlled according to the present invention that has been used at least one time, it is decided in step S10 that the operating period will not be the very first one, so that the first or the second operating mode is selected according to the last operating mode used during the last operation period. Thus, in this case searching for an accessible network in step S20, and S70 is skipped and an accessible network is searched according to the operation modes of step S40 or step S90 in dependence on the frequency band and operating mode that was used during the last operation period.

Although the present invention as been explained in more detail in connection with GSM standards only, it is also possible to use the present invention with a mobile telephone or another telecommunications device that can be operated not only in different frequency bands but also with different communication standards. The advantages of the present invention become more and more evident in case that the number of possible operating modes, available frequency bands and standards increases, so that not only dual-mode or triple-mode devices are used but also devices that can be used in a pluarlity of operating modes. Furthermore, a device can either be a mobile telephone or any other wireless terminal, e.g. a data terminal for fixed or mobile usage.

## Claims

1. A method for controlling a wireless multi-band and/or multi-mode communications device for use in wireless networks with a plurality of frequency bands in a plurality of geographical areas, said communication device being provided with an automatic operating mode selection mechanism, the method comprising the steps of:
grouping frequency bands and/or modes so that each group contains those of the frequency bands and/or operating modes only that can co-exist in a single geographic area,
searching for a communications network by scanning that group of frequency bands or operating modes first that were used during the last successful operation, and
continuing the search through other possible groups of frequency bands or modes only in the case that no accessible network was found in the group of frequency bands searched first.

2. The method according to claim 1, **characterized in that** after detecting an accessible network further operation is restricted to those frequency bands and/or operating modes that belong to the same group as the frequency band and operating mode used by the accessible network, as long as a network is available in spite of this restriction.

3. The method according to claim 2, **characterized in that** after abolishing the restriction of operation in case that no accessible network can be found in the selected group, the search for an accessible communications network is continued for all possible frequency bands and/or operating modes starting with a frequency band and/or operating modes that does not belong to the group of frequency bands and/or operating modes that has been selected by the restriction.

## Patentansprüche

1. Verfahren zum Steuern einer drahtlosen Multiband- und/oder Multimodus-Kommunikationseinrichtung zur Verwendung in drahtlosen Netzen mit mehreren Frequenzbändern in mehreren geographischen Bereichen, wobei die Kommunikationseinrichtung mit einem automatischen Betriebsmodusauswahlmechanismus versehen ist, wobei das Verfahren die Schritte umfasst, dass:
Frequenzbänder und/oder Modi derart gruppiert werden, dass jede Gruppe nur jene der Frequenzbänder und/oder Betriebsmodi enthält, die in einem einzelnen geographischen Bereich koexistieren können,
nach einem Kommunikationsnetz gesucht wird, indem zuerst die Gruppe von Frequenzbändern oder Betriebsmodi durchsucht wird, die während des letzten erfolgreichen Betriebs verwendet wurden, und
mit der Suche in anderen möglichen Gruppen von Frequenzbändern oder Modi nur in dem Fall fortgefahren wird, dass in der zuerst durchsuchten Gruppe von Frequenzbändern kein zugängliches Netz gefunden wurde.

2. Verfahren nach Anspruch 1,
**dadurch gekennzeichnet, dass**
nach dem Detektieren eines zugänglichen Netzes der weitere Betrieb auf jene Frequenzbänder und/oder Betriebsmodi beschränkt wird, die zu der gleichen Gruppe wie das Frequenzband und der Betriebsmodus gehören, die durch das zugängliche Netz verwendet werden, solange trotz dieser Beschränkung ein Netz zur Verfügung steht.

3. Verfahren nach Anspruch 2,
**dadurch gekennzeichnet , dass**
nach dem Aufheben der Beschränkung des Betriebs in dem Fall, dass kein zugängliches Netz in der ausgewählten Gruppe gefunden werden kann, die Suche nach einem zugänglichen Kommunikationsnetz für alle möglichen Frequenzbänder und/oder Betriebsmodi beginnend mit einem Frequenzband und/oder Betriebsmodi, die nicht zu der Gruppe von Frequenzbändern und/oder Betriebsmodi gehören, die durch die Beschränkung ausgewählt wurden, fortgesetzt wird.

## Revendications

1. Procédé de commande d'un dispositif de communication sans fil multi-bande et/ou multi-mode à utiliser dans des réseaux sans fil avec une pluralité de bandes de fréquence dans une pluralité de zones géographiques, ledit dispositif de communication présentant un mécanisme de sélection de mode de fonctionnement automatique, le procédé comprenant les étapes consistant à :
grouper des bandes de fréquence et/ou des modes de telle sorte que chaque groupe contienne uniquement les bandes de fréquences et/ou les modes de fonctionnement qui peuvent coexister dans une seule zone géographique,
rechercher un réseau de communication en parcourant d'abord le groupe de bandes de fréquence ou de modes de fonctionnement qui a été utilisé lors de la dernière opération réussie, et
continuer la recherche dans d'autres groupes possibles de bandes de fréquence ou de modes uniquement dans le cas où aucun réseau accessible n'a été trouvé dans le groupe de bandes de fréquence dans lequel la recherche a été effectuée en premier.

2. Procédé selon la revendication 1, **caractérisé en ce que**, après la détection d'un réseau accessible, toute opération suivante est restreinte aux bandes de fréquence et/ou aux modes de fonctionnement qui appartiennent au même groupe que la bande de fréquence et le mode de fonctionnement utilisé par le réseau accessible, tant qu'un réseau est disponible malgré cette restriction.

3. Procédé selon la revendication 2, **caractérisé en ce que**, après avoir aboli la restriction de fonctionnement dans le cas où aucun réseau accessible ne peut être trouvé dans le groupe sélectionné, la recherche d'un réseau de communication accessible continue pour toutes les bandes de fréquence et/ou tous les modes de fonctionnement possibles en commençant par une bande de fréquence et/ou des modes de fonctionnement qui n'appartiennent pas au groupe de bandes de fréquence et/ou de modes de fonctionnement qui a été sélectionné par la restriction.
